# EUROPEAN PATENT APPLICATION

(11) **EP 4 053 547 A1**
(43) Date of publication of application: **07.09.2022**
(21) Application number: 22160060.4
(22) Date of filing: 03.03.2022
(51) Int. Cl.: G01N 22/02, E04F 21/08

(54) **DIAGNOSTIC SYSTEM FOR RESTORATION OPERATIONS AND CORRESPONDING METHOD**

(30) Priority: 03.03.2021 IT 202100004952
(71) Applicant: Tecno Edile Toscana S.r.l. Start-Up Innovativa, 04100 Latina (LT) (IT)
(72) Inventor: BONACCINI, Alfredo, 04100 LATINA (LT) (IT)
(74) Representative: Studio Torta S.p.A.

(57) **Abstract**

A diagnostic system (10) for operations aimed at filling detachments between a superficial layer (11) having an upper surface (11a) and a corresponding wall support (12) involving the presence of at least one cavity (14) interposed between the superficial layer (11) and the wall support (12), comprising: a transmission device (18), designed to propagate an injected electrical signal (S_{g}) inside a material (16) introduced into the cavity (14); and at least one receiver device (26), designed to be approached externally to the upper surface (11a) of the superficial layer (11) above the cavity (14) so as to detect an electromagnetic signal transmitted by the material (16) as a result of the introduction of the injected electrical signal (S_{g}) and to process a corresponding received signal (Sᵣ) to provide information on the presence of the material (16) in the cavity.

## Description

### CROSS-REFERENCE TO RELATED APPLICATIONS

This patent application claims priority from Italian patent application no. 102021000004952 filed on March 3, 2021.

### TECHNICAL FIELD

The present invention relates to a diagnostic system for restoration operations and to a corresponding implementation method.

In particular, the present solution refers to operations for the strengthening of architectural structures or for the re-adhesion of superficial layers such as, for example, plasters, pictorial films, detached from the corresponding wall support.

### STATE OF THE PRIOR ART

In the restoration of valuable surfaces such as decorated plasters (frescoes or paintings), stone, mosaic or similar surfaces, various techniques are used to determine the presence of detachment and damage, and more generally to assess the compactness and cohesion of the supports.

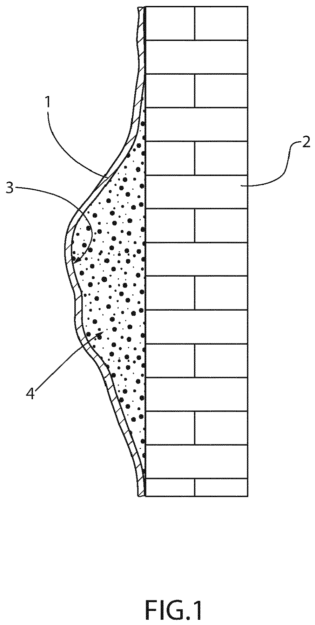

In this regard and purely by way of example, Figure 1 shows the partial detachment of a superficial or finishing layer 1 (for example a plaster or a mosaic) from a wall support 2, with the formation of a cavity (or interspace) 3 below the superficial layer 1; as discussed below, during the restoration operation, a suitable strengthening material 4, for example a hydraulic mortar, is introduced into the cavity 3 to make the superficial layer 1 re-adhere to the wall support 2.

The most commonly used technologies for carrying out a "stratigraphic" analysis generally adopt the analysis of transmitted and reflected waves, of the electromagnetic or mechanical (ultrasound) type, as their operating principle; in a known way, the presence of cavities or discontinuities in the material is revealed by suitable analysis of the waves which are reflected as a result of the different physical features of the layers of building material of the wall support 2 or of the superficial layer 1 or of the air of the cavity 3.

For assessing surfaces, thermographic imaging techniques are also used, which are based on the conversion of infrared spectrum emission of surfaces into images, thereby identifying detachments or separation layers by means of temperature differences between adjacent areas.

In a known way, once the presence of voids or detachments has been identified, the restoration operation is carried out by applying a drilling grid onto the surfaces of the masonry or along the fracture lines; once the most suitable material as regards composition and performance characteristics has been selected, it is then infiltrated into the previously made holes, for example by means of a syringe or other suitable insertion tool (for example of the type described in patent application 102020000026987 of 11/11/2020 filed in the name of the same Applicant), in order to restore continuity to the masonry by filling the cavities.

Once the strengthening phase has been completed, it will be possible to replicate the above diagnostic assessment, in order to reveal any areas in which the operations of infiltration of strengthening materials have not given the expected outcome; if this is the case, the surfaces would again have to be drilled and strengthened, with further loss and damage of the supports and original decorations.

The present Applicant has also found that, due to the cost and complexity of the diagnostic steps, restoration operations are therefore often carried out in the absence of a preliminary instrumental assessment (and therefore without a precise diagnosis of the degradation state of the surfaces to be restored), relying on more empirical methods such as visual inspection, manual tapping and/or auscultation; during strengthening there are no effective methods allowing the diffusion of the injected material into the cavities to be verified accurately, this however being a central aspect of the restoration operation that can only be verified after the setting and with the diagnostic methods described above.

Therefore, there is a need to overcome the drawbacks of the prior art by providing a diagnostic solution for restoration operations which is simple and quick to implement, and can also be monitored during, or immediately following the application of the strengthening material.

### OBJECT OF THE INVENTION

According to the present solution, a diagnostic system and a diagnostic method are provided as defined in the appended claims.

### BRIEF DESCRIPTION OF THE DRAWINGS

For a better understanding of the invention, embodiments thereof will now be described, purely by way of non-limiting example and with reference to the accompanying drawings, wherein:
- Figure 1 is a schematic cross-sectional view relating to a situation of partial detachment of a superficial or finishing layer from a corresponding wall support;
- Figure 2 is a schematic front view of a diagnostic system according to one embodiment of the present solution, for monitoring an operation aimed at filling a detachment as shown in Figure 1;

- Figure 3 is a schematic front view relating to the monitoring of the distribution of restoration material by means of a receiver device in the diagnostic system of Figure 2; and
- Figure 4 is a schematic front view of the diagnostic system according to a further embodiment of the present solution.

### PREFERRED EMBODIMENT OF THE INVENTION

As will be described in detail below, one aspect of the present solution provides a diagnostic system for monitoring and obtaining information on the flow of an introduced material, in particular a strengthening hydraulic restoration mortar, inside cracks, openings or in general in cavities or discontinuities to be filled, and on its distribution so as to ensure the effectiveness of the strengthening operation.

The diagnostic system comprises: a transmission device designed to propagate an electrical signal within the strengthening restoration material distributed in the cavity; and a receiver device, advantageously of the portable type, designed to be approached externally to the surface delimiting the cavity and configured so as to recognize the presence/proximity of the restoration material by receiving the electromagnetic signal transmitted by means of the transmission device. The receiver device is also optionally configured to extrapolate accessory information from the received signal, such as the distance from the surface, local thickness of the interposed coating layer, quantity of strengthening material therein, etc.

In particular, the diagnostic system is designed to operate during the introduction of the material, simultaneously or immediately following the application of the same material inside the cavity.

The material introduced into the cavity is at least partly conductive (being itself conductive or suitably susceptible of being made so) and has electrical conductivity characteristics such as to allow the propagation of the electrical signal, acting as an antenna when the electrical signal, in particular a radio-electrical (i.e., radio-frequency) signal, is propagated therein, and emitting an electromagnetic signal as a function of the same radio-electrical signal propagated therein and of the characteristics of the medium.

In particular, the strengthening restoration material, for example a hydraulic mortar, a nanosilica or a resin, is usually dispersed, emulsified, or mixed with water and/or alcohol, thus consisting of a dielectric material having a high electrical permittivity (εᵣ>>1) at room temperature and in the frequency range from 100 MHz to 3 GHz, generally from 40 to 80, and a non-magnetic behaviour (magnetic permeability µᵣ~1).

As will also be described below, the aforementioned receiver device is provided with an antenna or similar receiving element, to receive the electromagnetic signal emitted by the material, in particular the restoration material, from the outside of the surface being strengthened, providing information on the presence and possibly proximity of the same restoration material relative to the position in which the receiver device is located.

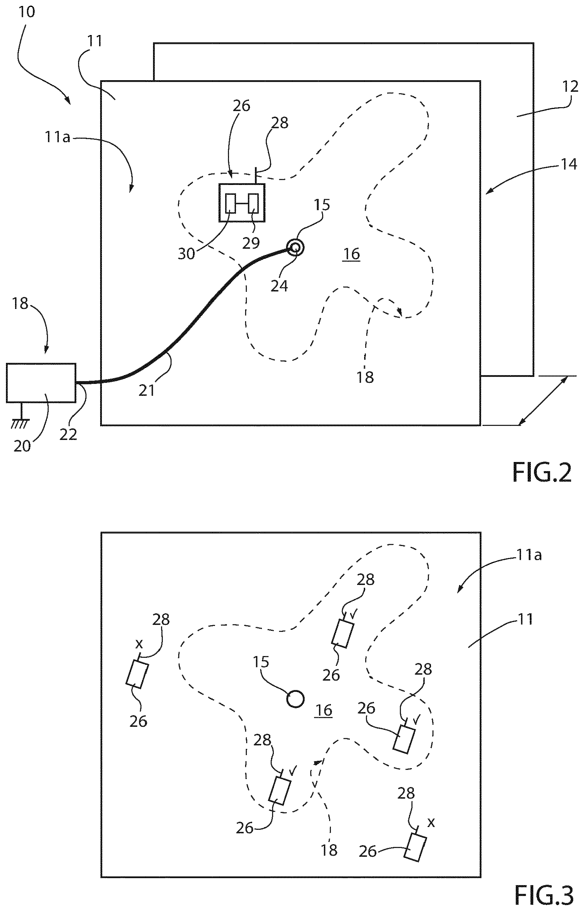

Figure 2 schematically shows the diagnostic system according to one embodiment of the present solution, indicated as a whole with 10.

Figure 2 shows, by way of example, a superficial or coating layer 11, partially detached from a support 12 (for example a wall support) behind it, with the formation of an interspace or cavity 14 between said coating layer 11 and the support 12.

One or more holes (only one shown in Figure 2 by way of example and indicated with 15) are formed starting from an upper surface 11a of said coating layer 11, in fluidic communication with said cavity 14 so as to allow access and introduction, for example, by means of a syringe or similar manual or even partially automatic introduction tool, of a material 16, in particular a restoration material having the nature of a strengthening agent and therefore capable of closing, at least in part, the cavity 14 by re-adhering the coating layer 11 to the underlying support 12. Alternatively, it should be noted that a point of access to the cavity other than the hole 15 could already be present on the upper surface 11a, for example due to fractures or surface damage of the coating layer 11.

In particular, purely by way of example, the dashed line shows the area 18 where the material 16 is distributed following the introduction through the hole 15. Typically, this area 18 is circumscribed with respect to the hole 15, for example, it has a perimeter that can have a maximum distance from the hole 15 in the order of a few tens of cm.

According to one aspect of the present solution, the diagnostic system 10 comprises a transmission device 18 having a signal generator 20, configured to generate an electrical signal (in particular, a radio-electrical signal) S_{g}, suitable for being injected into the material 16 (referred to hereinafter as the injected signal S_{g}).

In the embodiment shown in the above Figure 2, the transmission device 18 comprises an electrical cable 21 having a first end electrically coupled to an output 22 of the signal generator 20 and a second end electrically coupled to a conductive element in electrical contact with said material 16.

In particular, this conductive element is here an injection electrode 24, arranged at the second end of the same electrical cable 21, made of a suitable conductive material (for example, copper, gold or silver), designed to be introduced into the hole 15 in order to come into contact with the material 16 previously applied inside the cavity 14.

The injected signal S_{g} generated by the signal generator 20, of any known type not described in detail herein, is, for example, a voltage or current radio-frequency signal having a sinusoidal, triangular or square-wave pattern (in any case, which can be expressed as a composition of sinusoidal waveforms) depending, for example, on the characteristics of the material 16, the coating layer 11 and/or the support 12.

The injected signal S_{g} has variable amplitude and frequency depending on the characteristics of the aforesaid material 16, the coating layer 11 and/or the support 12 (such as a degree of humidity or an electrical resistivity), on the presence of noise signals or several apparatuses operating on contiguous surfaces, or on other factors; the amplitude is, for example, between 5 and 15 V peak-to-peak and the frequency is, for example, between 5 MHz and 3 GHz.

In this embodiment, a direct electrical contact (of the galvanic type) is therefore provided between the signal generator 20 and the material 16, for the introduction of the injected signal S_{g}; alternatively, in a manner not shown, a capacitive coupling could be provided between the same signal generator 20 and the material 16.

The material 16, by virtue of the above-mentioned properties (in particular in that it is at least partly conductive, for example, thanks to the presence of the water or alcohol liquid component), behaves substantially as a transmission antenna and generates, according to the injected signal S_{g} generated by the signal generator 20 and also to the characteristics of the same material 16, an electromagnetic signal, which is propagated in the surrounding area, in particular in the area 18 in which the same material 16 is distributed following the introduction through the hole 15.

The diagnostic system 10 therefore comprises at least one receiver device 26, designed to be arranged in contact with or approached externally at a certain distance from the upper surface 11a of the coating layer 11, and configured so as to detect the above electromagnetic signal and determine, depending on characteristics (for example, amplitude and/or frequency and/or phase) of a corresponding received signal Sᵣ, the presence of the material 16 inside the cavity 14 at the position assumed by the same receiver device 26.

In particular, the receiver device 26 comprises an antenna 28, designed to receive the aforesaid electromagnetic signal, and a processing circuit 29, designed to process the received signal Sᵣ, being a function of the same electromagnetic signal, to obtain information on the presence of the material 16. This information may also include an indication of the distance of the material 16 from the receiver device 26 and, hence, from the upper surface 11a of the coating layer 11.

For example, the processing circuit 29 is configured to obtain and process (for example by performing a comparison with respective thresholds or reference values) the amplitude, frequency and/or phase of the received signal Sᵣ.

Advantageously, the receiver device 26 is of the portable type, so as to be moved, for example by an operator, as also shown in Figure 3, above the upper surface 11a of the coating layer 11 in the area where the correct filling and distribution of the material 16 is to be monitored.

In particular, the above-mentioned Figure 3 shows various positions assumed by the receiver device 26 on the upper surface 11a of the coating layer 11, schematically indicating: the sign 'V' in the case where the processing by the processing circuit 29 returns a positive determination of the presence of the material 16 (for example, since the amplitude of the received signal Sᵣ is greater than a pre-set threshold or a threshold determined in a calibration step; or since the frequency of the same received signal Sᵣ corresponds to a pre-set value or range of values or, again, to a value determined in a calibration step); the sign 'X' in the case where the processing by the processing circuit 29 returns a negative determination of the presence of the material 16, that is, indicative of the absence of the same material 16.

In a possible implementation, as shown schematically in said Figure 2, the receiver device 26 further comprises a display element 30 (for example, a touch screen), configured to display the information on the presence of the material 16, for example, the above-mentioned signs 'V' and 'X' and/or more detailed information, for example concerning the intensity of the received signal Sᵣ and therefore the proximity of the material 16, or the quantity of material 16 at the position assumed by the same receiver device 26.

According to one aspect of the present solution, the receiver device 26 further comprises a user interface, in the example implemented by means of the same display element 30, configured to allow the user to interact with the same receiver device 26, for example, in order to select the type and quantity of information displayed and optionally to suitably adjust the processing features of the received signal Sᵣ (for example, an amplification level or gain and/or a filtering band by the processing circuit 29) in order to adapt to the characteristics of the operating environment, for example of the coating layer 11, the support 12 and/or the same material 16.

Alternatively, the above processing features of the received signal Sᵣ (for example, the amplification level or gain or the filtering band of the processing circuit 29) can be determined during an initial calibration step suitable to adapt the diagnostic system 10 to the material 16 and to the specific application and scope of use (for example, to the properties and characteristics of the coating layer 11).

It should be noted that, in one possible implementation, the receiver device 26 may be a mobile electronic device for cellular communication, such as a smartphone, tablet, phablet or the like, in this case equipped with a microprocessor designed to execute a suitable software application ("app") in order to perform the monitoring operations described above. In this case, the electromagnetic signal could advantageously be in accordance with the Bluetooth communication protocol or other radio-frequency communication protocol present and used by the same electronic device.

In use, an operator responsible for the restoration operations, after having possibly made the hole 15 to gain access to the area to be restored, inserts the material 16 into the cavity 14, for example by means of an introduction syringe.

Once the material 16 has been totally or partially inserted (it should be noted that the operation of introducing the material 16 can involve various fillings by the introduction syringe), the operator introduces the injection electrode 24 into the hole 15, so as to introduce the injected signal S_{g}, generated by the signal generator 20, into the same material 16.

Then, the operator uses the receiver device 26 to monitor the distribution of the material 16 in the cavity 14, by moving the same receiver device 26 above the upper surface 11a of the coating layer 11, in the area surrounding the same hole 15 (at said area 18).

The diagnostic system 10 therefore allows the operator to be provided with immediate feedback, during the operations of restoration and introduction of the strengthening material, regarding the correct distribution of the material 16; for example, the operator, as a result of the information obtained by means of the diagnostic system 10, can optionally inject further material 16, make further holes 15 or implement different and further corrective actions allowing a more effective restoration action.

A variant of the present solution provides the introduction, into the surfaces of which restoration is to be assessed, of a material 16 with no strengthening function that does not damage the surfaces and whose purpose is therefore only of diagnosis for tracking and monitoring the detached or damaged areas.

In this case, the injected signal S_{g} is propagated in said material 16, the former also in this case having suitable conductive properties and designed to act as an antenna for the transmission of the electromagnetic signal, which is propagated in the surrounding area, in particular, in the area to be monitored where the same material 16 is distributed.

In this implementation too, at least one receiver device 26 is used to receive and process the received signal Sᵣ, as a function of the same electromagnetic signal, and to obtain the information on the presence and proximity of the material 16 and, consequently, to obtain monitoring information on the area to be restored. For example, the identification of the presence of the material 16 in the position of the receiver device 26 is indicative of the extent of a cavity 14, due to detachment, below the same receiver device 26.

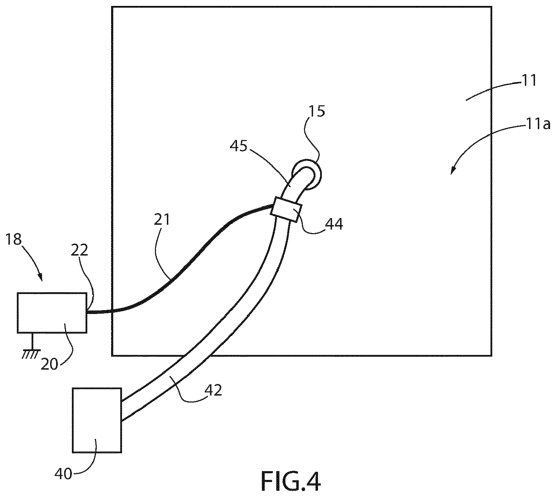

With reference to Figure 4, a further possible embodiment of the diagnostic system 10 is now described, particularly with regard to a different solution for coupling the signal generator 20 to the material 16.

In this embodiment, the material 16 is introduced into the cavity 14 by means of an automatic (or semi-automatic) injection apparatus 40, for example comprising a peristaltic injection pump, having an outlet duct 42 designed to convey the material 16.

This outlet duct 42, made of an insulating material, for example plastic, is coupled by means of a joining element (or joint) 44, made of a conductive material, for example metal, to an injection tube 45, which is designed to be introduced inside the hole 15 for introducing the material 16 into the cavity 14. In use, for example, this joint 44 may be arranged in contact with the upper surface 11a of the coating layer 11, at the hole 15.

In this embodiment, the electrical cable 21 connects the output 22 of the signal generator 20 to the aforesaid joint 44, the second end of the same electrical cable 21, distal to the signal generator 20, being electrically coupled to the joint 44 (which here represents the aforesaid conductive element in electrical contact with the material 16), for example by welding or using a suitable connector; since the joint 44 is made of a conductive material and also the same joint 44 is internally in direct contact with the material 16, in this case, too, it is possible to introduce and propagate the injected signal S_{g} in the material 16 so that the same material 16 acts as an antenna and emits the electromagnetic signal in the surrounding area.

Similar to above, therefore, in this embodiment too, at least one receiver device 26 can be used by the operator to monitor the distribution of the material 16 inside the cavity 14.

Advantageously, in this embodiment, monitoring can also be done during the introduction of the material 16, without interrupting its delivery by the injection apparatus 40; in other words, in this case, the diagnostic system 10 provides real-time feedback regarding the distribution of the material 16 during, and in parallel with, its introduction into the cavity 14.

The aforesaid injection apparatus 40 can be made, for example, as described in the aforesaid application 102020000026987 filed in the name of the same Applicant on 11/11/2020.

In particular, in this case, the injection apparatus 40 comprises: a containment bag having an opening for introducing the restoration material provided with a hermetic closure, and a withdrawal opening from which the restoration material to be applied is withdrawn; and an automatic syringe connected in a fluid-tight manner to said withdrawal opening. The automatic syringe is arranged to be directly connected to a reservoir of fluid to be injected and has a piston or plunger which, during its stroke to return to its retracted position, automatically causes the chamber in which said piston runs to be filled with the fluid to be injected. In this way, once the automatic syringe has made an injection, it can be refilled with the fluid to be injected without removing the needle or the injector tube from the injection hole.

In a possible embodiment, the transmission device 18, in particular the signal generator 20, can be integrated in the same injection device 40; in this case, the injection device 40 can have a signal output designed to be coupled by means of the electrical cable 21 to the material 16 (for example, by coupling to the aforesaid joint 44, or alternatively, by means of the injection electrode 24, in the case where the introduction of the injected signal S_{g} into the material 16 occurs following the introduction of the same material 16).

The advantages achieved by the present solution are clear from the foregoing description.

In any case, it should again be noted that the present solution represents an effective, quick, and economical solution for monitoring the effectiveness of restoration operations, in particular the strengthening or the infiltration of materials within architectural structures.

Particularly advantageous is the offered possibility of monitoring during the introduction of the strengthening restoration material or immediately following the introduction of at least a part of this restoration material.

The solution discussed herein can also be advantageously used for diagnostic purposes, before the restoration operation or after the same operation, for example, to monitor the extent of detachment between the coating layer 11 and the corresponding support 12.

Variations and modifications may also be applied to the present solution, without however departing from the scope defined by the attached claims.

In particular, in a possible implementation, the injected signal S_{g} generated by the signal generator 20 can be suitably coded by means of digital coding, in order to increase its noise immunity. Moreover, by using different encodings, it is also possible to use different transmitter/receiver pairs (consisting of the signal generator 20 and a respective receiver device 26), even in proximity to each other, without mutual interference.

In a further possible variant, the signal generator 20 is configured to allow an operator to modify the features (for example, in terms of amplitude, frequency and possible coding) of the injected signal S_{g}, for example, in order to adapt it to the different materials making up the surfaces to be strengthened, so as to improve its propagation and, consequently, its reception.

As also discussed above, the modification of the above features of the injected signal S_{g} could also be implemented automatically in a calibration step prior to the actual monitoring operations by the diagnostic system 10.

A further possible variant could provide the incorporation, into the material 16, of suitable permanently conductive elements or particles allowing the propagation of the injected signal S_{g} even after the possible dehydration or evaporation of the liquid medium (typically water or alcohol) used to convey the strengthening material into the cavity 14; for example, a metal component (in micronized form), a conductive paint or a similar permanently conductive component could be introduced into the material 16.

## Claims

1. A diagnostic system (10) for operations aimed at filling detachments between a superficial layer (11) having an upper surface (11a) and a corresponding wall support (12) involving the presence of at least one cavity (14) interposed between said superficial layer (11) and said wall support (12), comprising:
a transmission device (18), configured to propagate an injected electrical signal (S_{g}) inside a material (16) introduced in said cavity (14); and
at least one receiver device (26), designed to be approached externally to the upper surface (11a) of the superficial layer (11) and configured to detect an electromagnetic signal transmitted by the material (16) as a result of the introduction of said injected electrical signal (S_{g}) and to process a corresponding received signal (Sᵣ) to provide information on the presence of said material (16),
wherein said injected electrical signal (S_{g}) is a radio-frequency signal; and said transmission device (18) comprises: a signal generator (20), configured to generate said injected electrical signal (S_{g}); and an electrical cable (21), having a first end electrically coupled to an output (22) of the signal generator (20) and a second end electrically coupled to a conductive element (24; 44) in electrical contact with said material (16); wherein said material (16) is at least partly electrically conductive.

2. The system according to claim 1, wherein said conductive element comprises an injection electrode (24), of a conductive material, coupled to the second end of said electrical cable (21) and designed to be introduced into a hole (15) in fluidic communication with said cavity (14) in order to come into contact with said material (16).

3. The system according to claim 1, wherein said material (16) is introduced into the cavity (14) by means of an injection apparatus (40) having an outlet duct (42) designed to convey the material (16); wherein said conductive element comprises a joint (44), of a conductive material, coupled to said outlet duct (42) and internally in direct contact with said material (16).

4. The system according to any one of the preceding claims, wherein said signal generator (10) is configurable so as to adjust features of said injected electrical signal (S_{g}) in order to adapt to characteristics of said superficial layer (11) and/or of said wall support (12) and/or of said material (16).

5. The system according to any one of the preceding claims, wherein said injected electrical signal (S_{g}) generated by the signal generator (20) is coded by means of digital coding.

6. The system according to any one of the preceding claims, wherein said receiver device (26) comprises an antenna (28), designed to receive said electromagnetic signal, and a processing circuit (29), configured to process the received signal (Sᵣ) to obtain said information on the presence of the material (16).

7. The system according to claim 6, wherein said information comprises an indication of the distance of the material (16) from the receiver device (26) and, hence, from the upper surface (11a) of the superficial layer (11).

8. The system according to claim 6 or 7, wherein said receiver device (26) is portable and is designed to be moved above the upper surface (11a) of the superficial layer (11) within an area to be monitored.

9. The system according to claim 8, wherein said receiver device (26) is a mobile electronic device for cellular communication.

10. The system according to any one of the claims 6-9, wherein said receiver device (26) comprises a display element (30), configured to display said information on the presence of the material (16).

11. The system according to claim 10, wherein said information comprises information concerning the intensity of the received signal (Sᵣ) and, hence, the proximity of the material (16) in the cavity (14), at the position assumed by said receiver device (26).

12. The system according to any one of the claims 6-11, wherein said receiver device (26) comprises a user interface, configured to allow processing features of the received signal (Sᵣ) to be adjusted, in order to adapt to the characteristics of said superficial layer (11) and/or of said wall support (12) and/or of said material (16).

13. The system according to any one of the preceding claims, wherein said material (16) is a restoration strengthening mortar with permanently conductive elements buried in it.

14. A diagnostic method for operations aimed at filling detachments between a superficial layer (11) having an upper surface (11a) and a wall support (12) involving the presence of at least one cavity (14) interposed between said superficial layer (11) and said wall support (12), comprising:
propagating an injected electrical signal (S_{g}) inside a material (16) introduced in said cavity (16);
detecting, externally to the upper surface (11a) of the superficial layer (11), an electromagnetic signal transmitted by the material (16) as a result of the introduction of said injected electrical signal (S_{g}); and
processing said received signal (Sᵣ) in order to provide information on the presence of said material (16),
wherein said injected electrical signal (S_{g}) is a radio-frequency signal; and detecting comprises detecting said electromagnetic signal at various positions above the upper surface (11a) of the coating layer (11) in an area where the filling and correct distribution of the material (16) is to be monitored.
